Europäisches Patentamt

European Patent Office

Office européen des brevets

(11) Publication number: **0 428 402 A1**

# EUROPEAN PATENT APPLICATION

(21) Application number: 90312423.8

(51) Int. Cl.⁵: **C09K 3/30**

(22) Date of filing: 14.11.90

(30) Priority: 16.11.89 AR 315456

(43) Date of publication of application:
22.05.91 Bulletin 91/21

(84) Designated Contracting States:
BE DE ES FR GB IT NL

(71) Applicant: **Portas, Abelardo Antonio**
**Arcos 2757 - 1o piso "E"**
**1428 Buenos Aires(AR)**

Applicant: **De Portas, Graciela Idalino Obiglio**
**Arcos 2757 - 1o piso "E"**
**AR-1428 Buenos Aires(AR)**

(72) Inventor: **Portas, Abelardo Antonio**
**Arcos 2757 - 1o piso "E"**
**1428 Buenos Aires(AR)**
Inventor: **De Portas, Graciela Idalino Obiglio**
**Arcos 2757 - 1o piso "E"**
**AR-1428 Buenos Aires(AR)**

(74) Representative: **Crampton, Keith John Allen et al**
**D. YOUNG & CO. 10 Staple Inn**
**London WC1V 7RD(GB)**

(54) Propellant composition.

(57) A composition that can be used as carrier for substances including chemically, physically or biologically active products is constituted by two components that interact when they are expelled in converging directions from their respective containers by means of a propelling agent, generating in situ myriad particles or drops of very small size and with the capacity of maintaining themselves temporarily airborne while being transported by it, one of the components containing ammonia and mono ($C_{1-4}$ alkyl) amine other than isopropylamine and/or a di-($C_{1-2}$ alkyl) amine together with a compressible gas as propelling agent, the other component containing acetic acid and/or sulphur dioxide and a compressible gas as propelling agent.

At least one of the components contains the said substance, and either or both of the components optionally contain at least one of water, glycols, silicone, oils, mineral oils, silica, sodium tetraborate, ferric chloride, talc and finely divided dolomite.

EP 0 428 402 A1

## PROPELLANT COMPOSITION

The present invention relates to compounds to be used as carriers for other substances or active chemical, physical or biological products.

Conventional methods used for the distribution of solid or liquid particles, using spraying systems and known chemical or physical carriers, normally result in particles with both the size and physical characteristics, such as time of suspension in the air and release of the active products or other substances carried, regular and uniform.

It has now been found after much experimentation that acetic acid, sulphur dioxide and mixtures of them in different proportions, when sprayed simultaneously with ammonia or lower aliphatic amines, and in such a way that both become mixed in situ, thus allowing for the chemical reaction between the acidic and basic materials, produce particles carrying active products and having a size depending on the formulation.

Previous to this, compounds have been formulated in an attempt to obtain air-borne suspensions or sols of active substances that will not be dependent upon the relative humidity of the atmosphere and at the same time do not produce undesirable chemical reactions between the carrier and the carried substance. However, none of them has made it possible to obtain an airborne suspension or sol that, while inert in relation to the carried active substance, disperses slowly in the atmosphere and has a specific gravity allowing it to remain in suspension without being dispersed or precipitated.

The present invention provides a composition that can be used as a carrier for substances including chemically, physically or biologically active products, and that is formed by two components that interact when expelled into the atmosphere in converging directions from their respective containers, e.g. by means of a propelling agent, thus generating in situ myriads of particles or very small drops, capable of remaining suspended in and being carried by the atmosphere, the first component being one or more of ammonia, mono (C$_{1-4}$ alkyl) amines other than isopropylamine, and di (C$_{1-2}$ alkyl) amines and the other component being acetic acid or sulphur dioxide or a mixture thereof, together with, as a propelling agent, a compressible gas, and optionally water, glycols, silicone oil, mineral oils and finely divided silica, sodium tetraborate, ferric chloride, sodium chloride, talc and dolomite. The composition may also contain at least one component of the active material that is to be dispersed in the atmosphere.

The acetic acid and the sulphur dioxide can be used as sole acidic component or they can be used in admixture. Furthermore, It has been found that the proportion of acetic acid and sulphur dioxide in a mixture determines the size of the carrier particles of the resulting suspensions or sols. Thus the use of sulphur dioxide alone yields small particles, mixtures of acetic acid and sulphur dioxide yield medium-size particles, and the use of acetic acid alone yields large particles.

Ammonia is used as an aqueous solution, usually about 30% volume, dimethylamine is the preferred amine.

Suitable propelling agents are those sold under the "Freon" trademark, but propane, butane and mixtures thereof are preferred.

Glycols used optionally include propyleneglycol, diethyleneglycol, hexyleneglycol, 2,3-dimethyl-2,3-butanediol, 1,6-hexanediol, sorbitol and glycerine.

Aerial suspensions or sols obtained as a result of the interaction of the components of the present invention are capable of transporting substances, including active chemical, physical or biological products and their mixtures, at various distances, altitudes, and places of easy or difficult access. They show different rates of adsorption, absorption, solubility and/or emulsifiability, and can be used to control the spreading speed of the transported substance or active product. These characteristics may be emphasized through the incorporation of one or some of the optional components mentioned above, including adsorbing, absorbing, jellifying, hygroscopic, and emulsifying substances, e.g. silicone oils provide antidampness properties, sodium tetraborate provides hygroscopy, anhydrous silica provides a high rate of absorption and adsorption, and glycols stabilize the water content.

Among the numerous substances that can be distributed by use of a composition in accordance with the invention are anticorrosion oils (physically active), pesticides, solvents and paints (chemically active) and enzymes (biologically active).

The following non-limiting Examples are provided to facilitate understanding of the present invention and how it may easily be put into practice.

EXAMPLE 1

60g of glacial acetic acid and 200cm$^3$ of a mixture of water and propyleneglycol, are placed in an aerosol container with a capacity of 473cm$^3$ and the container is sealed and 176cm$^3$ of propane-butane propellant added. Any of the other glycols mentioned above can replace the propyleneglycol.

Another aerosol container of the same capacity

is filled with 57cm$^3$ of 305 volume ammonia solution, 3g of anhydrous sodium tetraborate and 200cm$^3$ of anticorrosion oil, and it is then sealed. The sodium tetraborate may be replaced by 3g of hydrated sodium tetraborate, gg of ferric chloride or 4g of sodium chloride. 176cm$^3$ of propane-butane propellant is added. Both aerosols are operated simultaneously and converging at some 20cm towards an iron object to be protected from corrosion. Large solid particles of ammonium acetate are generated in situ.

The size of the particles is modified and stabilized by adding substances such as sodium tetraborate, ferric chloride or sodium chloride and by their hygroscopic effect. These heavy particles will transport the anticorrosion oil up to the iron object and cause it to adhere to the whole surface, including the inside of any apertures that are open to the atmosphere.

EXAMPLE 2

A 473-cm$^3$ aerosol container is filled with 64g of liquid sulphur dioxide, 50g pentachlorophenol (fungicide) 100cm$^3$ of aromatic solvent, 1g of silicone oil and 100cm$^3$ of propane-butane propellant. The oil may be replaced by 6g mineral oils. Another container of same capacity as the former one is filled with 59g of dimethylamine, 20g of water and 170cm$^3$ of propane-butane propellant.

Both containers are operated simultaneously with the two jets colliding. This results in a subtle and highly mobile mass of ammonium bisulphite, which will carry the fungicide in all possible directions, and covering for more than 3 hours the environment being sprayed. The pentachlorophenol is deposited upon the ceilings, woodwork, and every crevice and nook and cranny and anywhere fungus may exist. The silicone or mineral oil will have a repellent effect between individual drops, resulting in smaller and lighter particles.

EXAMPLE 3

20g of glacial acetic acid, 40g of liquid sulphur dioxide, and 20g of fenpropathrin in solution of 150cm$^3$ of aromatic solvents and 160cm$^3$ of propane-butane propellant are introduced into a 473-cm$^3$ aerosol container. 57g of dimethylamine, 15g of water, 3g of finely divided silica, 20g of ethanol and 170cm$^3$ of propane-butane propellant are introduced into another aerosol container of the same capacity. The silica may be replaced by log of talc or 10g of finely divided dolomite.

The spray from both containers is projected simultaneously to converge at a height of 1.5m inside a greenhouse, with instantaneous production of particles of dipropylammonium bisulphite and dipropylamine acetate with a size between that of Examples 1 and 2. In accordance with the proportions of acetic acid and sulphur dioxide, it is possible to determine the size of the particles to be formed.

Adding silica results in greater residual effect of the particles, as rapid evaporation of the active product is thus avoided. The same result is obtained by the use of talc or finely divided dolomite.

The particles will cover a volume from ground level to 2m high and a cloud will be formed that is thicker than that of Example 2 but also more mobile.

This shows a positive insecticide action on plants in the ground and in pots in a greenhouse with an approximate total volume of 3,000 m$^3$. A greater residual effect is achieved by adding silica dioxide, talc, or dolomite, which reduce the evaporation of the active insecticide product.

EXPERIMENTS

Similarly trials were also carried out with monochloracetic acid, phosphorus trichloride, monobromacetic acid, acetyl halides, phosphorus tribromide and thionyl chloride, as the acid component. These all proved to be unfit for the purposes of the invention, as they showed various corrosion problems in the containers. Trials were also carried out with dibutylamine, triethanolamine, dipropylamine, isopropylamine, diethylenamine and triethylamine as the basic component, but they proved to be unfit for the purpose due to problems in the preparation of the compositions.

**Claims**

1. A composition that can be used as carrier for substances including chemically, physically, or biologically active products, that is constituted by two components that interact when they are expelled in converging directions from their respective containers by means of a propelling agent, generating in situ myriad particles or drops of very small size and with the capacity of maintaining themselves temporarily air-borne while being transported by it, in which one of the components contains ammonia, a mono($C_{1-4}$ alkyl) amine other than isopropylamine and/or a di($C_{1-2}$ alkyl) amine together with a compressible gas as propelling agent; while the other component contains acetic acid, and/or sulphur dioxide and a compressible gas as propelling agent; at least one of the components contains the said substance, and either or both of the components optionally contains at least one of water, glycols, silicone oils, mineral oils, silica, sodium tetraborate, ferric chloride, talc and finely divided dolomite.

2. A composition as claimed in claim 1, the compressible gas is a Freon, propane, butane, or a mixture of propane and butane.

3. A composition as claimed in claim 2 in which one of the components is constituted by glacial acetic acid, water, and propyleneglycol, diethyleneglycol, hexyleneglycol, 2,3-dimethyl-2,3-butanediol, 1-6-hexanediol, sorbitol or glycerin and the other component comprises a 30% by volume solution of ammonia together with sodium tetraborate, ferric chloride, or sodium chloride, and the propelling agent for both is a mixture of propane and butane.

4. A composition as claimed in claim 2 in which one of the components is constituted by liquid sulphur dioxide and a silicone oil or a mineral oil and the other component comprises dimethylamine and water, the propelling agent for both components being a mixture of propane and butane.

5. A composition as claimed in claim 2 in which one of the components is a mixture of glacial acetic acid and liquid sulphur dioxide and the other component comprises dimethylamine, ethanol, finely divided silica, talc or dolomite, the propelling agent for both components being a mixture of propane and butane.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 776 775  (LAZARUS)<br>* Claims 1,3,7,9 *<br>--- | 1,2,3 | C 09 K   3/30 |
| X | US-A-3 863 813  (METZNER)<br>* Claims 1,8; example 2 *<br>--- | 1,2,3 | |
| A | DE-A-2 411 727  (WILKINSON)<br>----- | | |

TECHNICAL FIELDS
SEARCHED (Int. Cl.5)

C 09 K

The present search report has been drawn up for all claims

| Place of search | Date of completion of the search | Examiner |
|---|---|---|
| THE HAGUE | 13-02-1991 | NICOLAS H.J.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)